# EUROPEAN PATENT SPECIFICATION

(11) **EP 3 680 492 B1**
(45) Date of publication and mention of the grant of the patent: **26.10.2022**
(21) Application number: 19854095.7
(22) Date of filing: 03.07.2019
(51) Int. Cl.: F15B 11/00, E02F 9/22, F16K 11/07, F16H 61/02, F16H 61/40, F16H 61/4061, F16H 61/4157, F16H 61/4148

(54) **REVERSE-ROTATION PREVENTION VALVE**
RÜCKDREHSICHERUNGSVENTIL
VANNE À PRÉVENTION DE ROTATION INVERSE

(30) Priority: 29.08.2018 JP 2018160329
(43) Date of publication of application: 15.07.2020
(73) Proprietor: KYB Corporation, Tokyo 105-6111 (JP)
(72) Inventor: KATSURA, Kosuke, Tokyo 105-6111 (JP); SUZUKI, Kenji, Tokyo 105-6111 (JP); KUBOI, Hiroaki, Tokyo 105-6111 (JP)
(74) Representative: Grünecker Patent- und Rechtsanwälte PartG mbB
(86) International application number: PCT/JP2019/026504
(87) International publication number: WO 2020/044783

(56) References cited:
- EP-A1- 1 500 850
- EP-A2- 1 120 573
- FR-A1- 2 847 525
- JP-A- S5 850 369
- JP-A- H07 293 509

## Description

The present invention relates to an anti-reverse valve.

### BACKGROUND ART

A hydraulic motor used in a turning device of a hydraulic excavator, etc. is rotated by inertia force even after supply of working oil is blocked, and stopped by brake pressure generated in a discharge side oil passage by a pumping operation of the hydraulic motor. However, since high pressure remains in the discharge side oil passage of the hydraulic motor, this pressure causes a reverse action of the hydraulic motor. Therefore, an anti-reverse valve configured to prevent a reverse action of a hydraulic motor is proposed (see JPH4-224302A).

### SUMMARY OF INVENTION

In the anti-reverse valve described in JPH4-224302A, a pair of check valves is provided inside a spool. Thus, the number of parts is large and a configuration is complicated. Therefore, there is a problem that the anti-reverse valve is costly. Further prior art is known from document EP 1 500 850 A1 which discloses a valve according to the preamble portion of claim 1.

An object of the present invention is to provide an anti-reverse valve configured to prevent a reverse action of an actuator at low cost.

The object is solved by the subject matter of claim 1.

### BRIEF DESCRIPTION OF DRAWINGS

Fig. 1 is a hydraulic circuit diagram of a hydraulic excavator according to an embodiment of the present invention, showing a hydraulic circuit for driving a hydraulic motor for turning.
Fig. 2 is a sectional view of an anti-reverse valve placed at a neutral position.
Fig. 3 is a sectional view of the anti-reverse valve placed at a second blocking position.
Fig. 4 is a sectional view of the anti-reverse valve placed at a second communication position.
Fig. 5 is a hydraulic circuit diagram of a hydraulic excavator according to a modified example of the present embodiment, showing a hydraulic circuit for driving a hydraulic motor for turning, but not forming part of the present invention.

### DESCRIPTION OF EMBODIMENTS

With reference to the drawings, an anti-reverse valve according to an embodiment of the present invention will be described. The anti-reverse valve is a device configured to prevent a reverse action of an actuator such as a hydraulic motor immediately after stoppage. In the present embodiment, an anti-reverse valve configured to prevent a reverse action of a hydraulic motor serving as an actuator used in a turning device of a hydraulic excavator will be described.

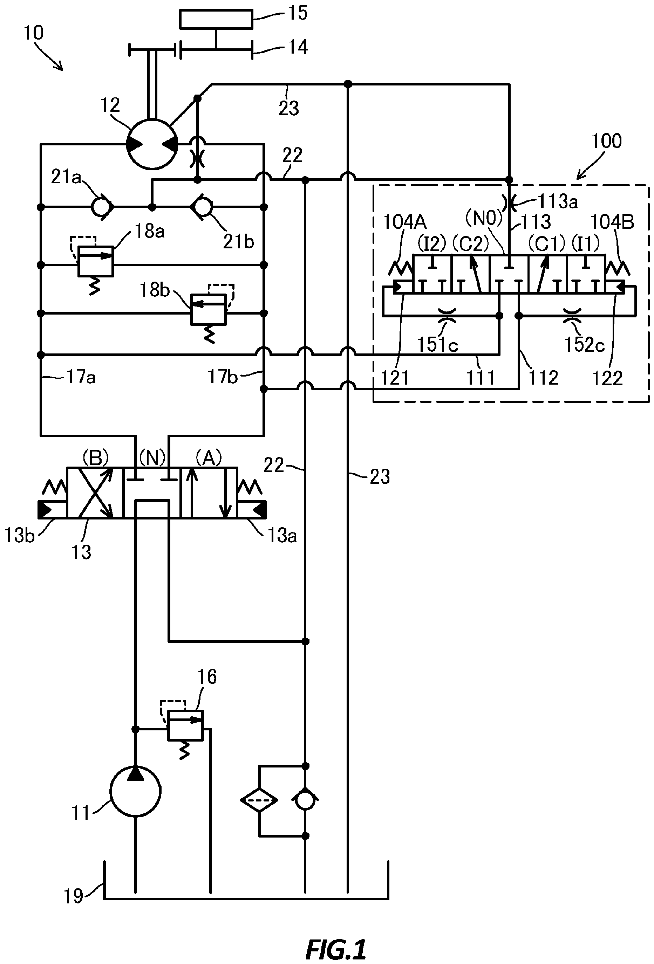

Fig. 1 is a hydraulic circuit diagram of a hydraulic excavator, showing a hydraulic circuit 10 for driving a hydraulic motor 12 for turning. This hydraulic circuit 10 is a hydraulic circuit in which a hydraulic pump 11 for turning and the hydraulic motor 12 for turning are connected by a direction control valve 13. The hydraulic circuit 10 includes a pair of main passages 17a, 17b through which working oil serving as a working fluid is supplied to and discharged from the hydraulic motor 12, a discharge passage 23 through which leakage oil generated in a casing of the hydraulic motor 12 is discharged to a tank 19, and a make-up passage 22 through which the working oil is supplemented to the main passages 17a, 17b through charging check valves 21a, 21b to be described later in order to suppress cavitation. The hydraulic circuit 10 includes the hydraulic pump 11 serving as a fluid pressure supply source to be driven by an engine (not shown), the hydraulic motor 12 to be rotated by the working oil discharged from the hydraulic pump 11 to drive and turn a turning body 15, a main relief valve 16 configured to regulate the highest pressure of the working oil discharged from the hydraulic pump 11, and the tank 19 in which the working oil is stored.

The hydraulic circuit 10 also includes the direction control valve 13 configured to control a flow of the working oil from the hydraulic pump 11 to the hydraulic motor 12, overload relief valves 18a, 18b placed between the main passage 17a and the main passage 17b and configured to release the working oil from the main passage on the high pressure side where the pressure becomes excessive pressure to the main passage on the low pressure side, the charging check valves 21a, 21b placed between the main passage 17a and the main passage 17b in order to supplement the working oil to the main passages 17a, 17b whose pressure is negative, the check valves 21a, 21b being configured to permit only a flow of the working oil from the make-up passage 22 connected to the tank 19 to the main passages 17a, 17b whose pressure is negative, and an anti-reverse valve 100 placed between the main passage 17a and the main passage 17b and configured to prevent a reverse action of the hydraulic motor 12 immediately after stoppage.

The direction control valve 13 is placed in an oil passage between the hydraulic pump 11 and the hydraulic motor 12, and controls a flow of the working oil from the hydraulic pump 11 to the hydraulic motor 12. Regarding the direction control valve 13, a position of a spool is controlled by operation pilot pressure inputted to pilot pressure chambers 13a, 13b.

The main passages 17a, 17b to which the working oil discharged from the hydraulic pump 11 is supplied through the direction control valve 13 are connected to the hydraulic motor 12. Rotation force of the hydraulic motor 12 is transmitted to a turning wheel 14 via a planetary reduction mechanism (not shown).

When an operator operates a turning lever (not shown) to the right turning side, the pilot pressure acts on the pilot pressure chamber 13a of the direction control valve 13 and the direction control valve 13 is switched to a right turning position (A). At the right turning position (A), the main passage 17a is connected to the hydraulic pump 11 and the main passage 17b is connected to the tank 19. Thereby, the working oil discharged from the hydraulic pump 11 is supplied to the hydraulic motor 12 through the main passage 17a and the working oil is discharged from the hydraulic motor 12 to the tank 19 through the main passage 17b, so that the hydraulic motor 12 is rotated in one direction (rotated forward). When the hydraulic motor 12 is driven and rotated forward, the turning body 15 is turned rightward.

When the operator operates the turning lever (not shown) to the left turning side, the pilot pressure acts on the pilot pressure chamber 13b of the direction control valve 13 and the direction control valve 13 is switched to a left turning position (B). At the left turning position (B), the main passage 17b is connected to the hydraulic pump 11 and the main passage 17a is connected to the tank 19. Thereby, the working oil discharged from the hydraulic pump 11 is supplied to the hydraulic motor 12 through the main passage 17b and the working oil is discharged from the hydraulic motor 12 to the tank 19 through the main passage 17a, so that the hydraulic motor 12 is rotated in the other direction (rotated reversely). When the hydraulic motor 12 is driven and rotated reversely, the turning body 15 is turned leftward.

When the operator brings back the turning lever (not shown) from the turning operation position on the right turning side or the left turning side to a neutral position, the pressure acting on the pilot pressure chambers 13a, 13b becomes tank pressure and the direction control valve 13 is switched to a neutral position (N). At the neutral position (N), the main passages 17a, 17b are closed by the direction control valve 13 and communication between the main passages 17a, 17b and the hydraulic pump 11 or the tank 19 is blocked. When the direction control valve 13 is switched to the neutral position (N), supply of the working oil from the hydraulic pump 11 to the hydraulic motor 12 is inhibited and discharge of the working oil from the hydraulic motor 12 to the tank 19 through the direction control valve 13 is inhibited.

The turning body 15 rotates the hydraulic motor 12 by inertia force. Thus, the working oil is accumulated in the main passage 17a or 17b on the discharge side (outlet side) of the hydraulic motor 12 by a pumping operation of the hydraulic motor 12, so that the pressure is increased. Thereby, brake pressure is generated in the main passage 17a or 17b on the discharge side of the hydraulic motor 12, and this braking force acts on the hydraulic motor 12 by this brake pressure. The highest pressure of the main passage 17a or 17b on the discharge side of the hydraulic motor 12 is regulated by the overload relief valves 18a, 18b serving as brake valves. By relieving the working oil of the main passage 17a or 17b on the discharge side of the hydraulic motor 12 to the main passage 17b or 17a on the suction side of the hydraulic motor 12 by the overload relief valves 18a, 18b, inertia energy is consumed, so that the turning body 15 is decelerated and stopped.

Although the hydraulic motor 12 is stopped by the brake pressure, the main passage 17a or 17b on one side where the brake pressure is generated is maintained in a high pressure state, and a pressure difference from the main passage 17b or 17a on the other side is generated. Therefore, the hydraulic motor 12 performs the reverse action in which the hydraulic motor is rotated in the opposite direction to the rotation direction before stoppage, and after that, a similar reverse action is repeated. Thus, in the present embodiment, in order to resolve the repeated reverse action for a short time, the anti-reverse valve 100 is provided.

The anti-reverse valve 100 prevents the turning body 15 from repeatedly performing the reverse action by releasing reverse pressure generated in the main passages 17a, 17b to the tank 19 due to start of the reverse action of the turning body 15. In the present embodiment, the anti-reverse valve 100 has a neutral position (N0), a first communication position (C1), a second communication position (C2), a first blocking position (11), and a second blocking position (12).

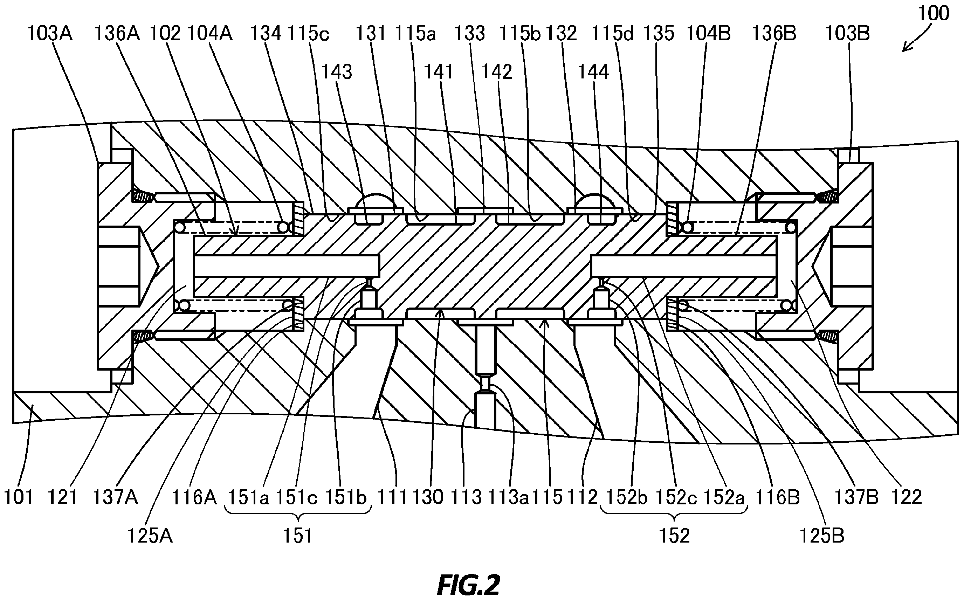

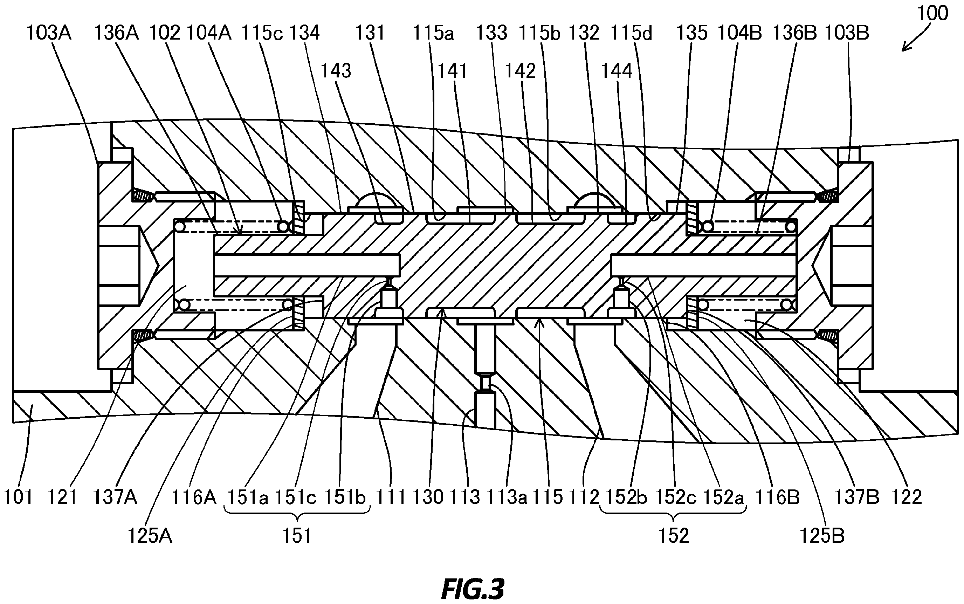

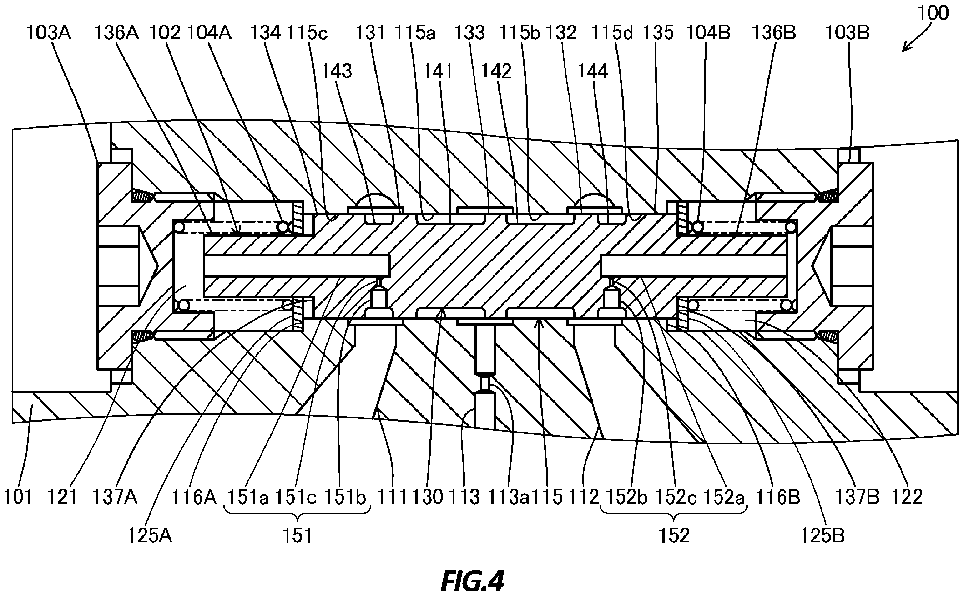

With reference to Figs. 2 to 4, a structure of the anti-reverse valve 100 will be described in detail. Fig. 2 is a sectional view of the anti-reverse valve 100 placed at the neutral position (NO). Fig. 3 is a sectional view of the anti-reverse valve 100 placed at the second blocking position (12). Fig. 4 is a sectional view of the anti-reverse valve 100 placed at the second communication position (C2). The anti-reverse valve 100 according to the present embodiment has a symmetrical shape.

As shown in Fig. 2, the anti-reverse valve 100 includes a valve housing 101 in which a first supply and discharge passage 111, a second supply and discharge passage 112, and part of a drain passage 113 to be described later are formed, a spool 102 slidably accommodated in the valve housing 101, first and second biasing springs 104A and 104B serving as a biasing member that biases the spool 102 by elastic force, and first and second pressure chambers 121 and 122 to which oil pressure force that biases the spool 102 is led.

As shown in Fig. 1, the first supply and discharge passage 111 is connected to the main passage 17a on one side among the pair of main passages 17a, 17b through which the working oil is supplied to and discharged from the hydraulic motor 12. The second supply and discharge passage 112 is connected to the main passage 17b on the other side among the pair of main passages 17a, 17b. The drain passage 113 is connected to the make-up passage 22 and the discharge passage 23.

As shown in Fig. 2, the spool 102 is slidably accommodated in an accommodation hole 115 provided in the valve housing 101. The accommodation hole 115 is provided to pass through the valve housing 101. One opening end portion of the accommodation hole 115 is closed by a first plug 103A, and the other opening end portion is closed by a second plug 103B.

The spool 102 is an axial member that is movable in the central axis direction (hereinafter, also simply referred to as the axial direction). The spool 102 is movable to the neutral position (N0), the first blocking position (11), the second blocking position (12), the first communication position (C1), and the second communication position (12) in the accommodation hole 115.

The first pressure chamber 121 is provided on the axially one side of the spool 102. The first pressure chamber 121 is defined by the first plug 103A, an inner peripheral surface of the accommodation hole 115, and an axially one end portion (left end portion in the figure) of the spool 102. The working oil that biases the spool 102 to the axially other side (rightward in the figure) toward the second communication position (12) is led to the first pressure chamber 121.

The second pressure chamber 122 is provided on the axially other side of the spool 102. The second pressure chamber 122 is defined by the second plug 103B, the inner peripheral surface of the accommodation hole 115, and an axially other end portion (right end portion in the figure) of the spool 102. The working oil that biases the spool 102 to the axially one side (leftward in the figure) toward the first communication position (I1) is led to the second pressure chamber 122.

The pair of biasing springs 104A, 104B are coil springs configured to hold the spool 102 at the neutral position (N0), to be extended and contracted in accordance with axial movement of the spool 102 to increase and decrease biasing force to the spool 102. The first biasing spring 104A is arranged in the first pressure chamber 121 in a compressed state, and biases the spool 102 in the same direction as the bias direction of the spool 102 by the oil pressure force of the first pressure chamber 121, that is, to the axially other side. The second biasing spring 104B is arranged in the second pressure chamber 122 in a compressed state, and biases the spool 102 in the same direction as the bias direction of the spool 102 by the oil pressure force of the second pressure chamber 122, that is, to the axially one side.

The spool 102 has a main body portion 130, and projecting end portions 136A, 136B projecting in the axial direction from both ends of the main body portion 130. The main body portion 130 has a central land portion 133 provided in an axially central portion of the spool 102, an outside first land portion 134 provided in the axially one end portion (left end portion in the figure) of the spool 102, an outside second land portion 135 provided in the axially other end portion (right end portion in the figure) of the spool 102, an inside first land portion 131 provided between the outside first land portion 134 and the central land portion 133, and an inside second land portion 132 provided between the outside second land portion 135 and the central land portion 133. The land portions 131, 132, 133, 134, 135 have circular sections on the central axis of the spool 102.

Plural annular grooves 141, 142, 143, 144 recessed radially inward are provided in an outer periphery of the spool 102. The inside first annular groove 141 serving as a first annular groove is provided between the central land portion 133 and the inside first land portion 131, and the inside second annular groove 142 serving as a second annular groove is provided between the central land portion 133 and the inside second land portion 132. The outside first annular groove 143 is provided between the inside first land portion 131 and the outside first land portion 134, and the outside second annular groove 144 is provided between the inside second land portion 132 and the outside second land portion 135.

The first supply and discharge passage 111, the drain passage 113, and the second supply and discharge passage 112 are provided in this order from the one end side of the accommodation hole 115 (left end side in the figure) toward the other end side (right end side in the figure). The outside first land portion 134 slides along an inner peripheral surface of an outside first sliding portion 115c of the accommodation hole 115 between the first pressure chamber 121 and the first supply and discharge passage 111. The inside first land portion 131 slides along an inner peripheral surface of an inside first sliding portion 115a of the accommodation hole 115 between the first supply and discharge passage 111 and the drain passage 113. The inside second land portion 132 slides along an inner peripheral surface of an inside second sliding portion 115b of the accommodation hole 115 between the drain passage 113 and the second supply and discharge passage 112. The outside second land portion 135 slides along an inner peripheral surface of an outside second sliding portion 115d of the accommodation hole 115 between the second supply and discharge passage 112 and the second pressure chamber 122. The central land portion 133 slides along the inner peripheral surfaces of the inside first sliding portion 115a and the inside second sliding portion 115b. The sliding portions 115a, 115b, 115c, 115d have circular sections on the central axis of the spool 102.

The projecting end portion 136A is abutted with the first plug 103A, and regulates the maximum moving amount (maximum stroke) to the axially one side (left side in the figure) of the spool 102. The projecting end portion 136B is abutted with the second plug 103B, and regulates the maximum moving amount (maximum stroke) to the axially other side (right side in the figure) of the spool 102 (see Fig. 3).

The first pressure chamber 121 has a circular section and an inner diameter larger than an inner diameter of the outside first sliding portion 115c. Therefore, a stepped portion 116A is formed between an inner peripheral surface of the first pressure chamber 121 and the inner peripheral surface of the outside first sliding portion 115c. The stepped portion 116A provided in the valve housing 101 functions as a first abutting portion to which a first spring receiving member 125A to be described later is abutted. Similarly, the second pressure chamber 122 has a circular section and an inner diameter larger than an inner diameter of the outside second sliding portion 115d. Therefore, a stepped portion 116B is formed between an inner peripheral surface of the second pressure chamber 122 and the inner peripheral surface of the outside second sliding portion 115d. The stepped portion 116B provided in the valve housing 101 functions as a second abutting portion to which a second spring receiving member 125B to be described later is abutted.

An outer diameter of the projecting end portion 136A is smaller than an outer diameter of the outside first land portion 134. Therefore, a stepped portion 137A is formed between an outer peripheral surface of the projecting end portion 136A and an outer peripheral surface of the outside first land portion 134. Similarly, an outer diameter of the projecting end portion 136B is smaller than an outer diameter of the outside second land portion 135. Therefore, a stepped portion 137B is formed between an outer peripheral surface of the projecting end portion 136B and an outer peripheral surface of the outside second land portion 135.

The first biasing spring 104A is arranged so that the projecting end portion 136A is inserted inside. The annular first spring receiving member 125A is provided between the stepped portion 137A provided on the one end side (left end side in the figure) of the spool 102 and the first biasing spring 104A. Therefore, the first biasing spring 104A biases the spool 102 toward the right side in the figure via the first spring receiving member 125A.

The second biasing spring 104B is arranged so that the projecting end portion 136B is inserted inside. The annular second spring receiving member 125B is provided between the stepped portion 137B provided on the other end side (right end side in the figure) of the spool 102 and the second biasing spring 104B. Therefore, the second biasing spring 104B biases the spool 102 toward the left side in the figure via the second spring receiving member 125B.

A first communication passage 151 always providing communication between the first supply and discharge passage 111 and the first pressure chamber 121 irrespective of the position of the spool 102 and a second communication passage 152 always providing communication between the second supply and discharge passage 112 and the second pressure chamber 122 irrespective of the position of the spool 102 are provided inside the spool 102.

The first communication passage 151 has an axial passage 151a open at an end surface of the projecting end portion 136A, the axial passage 151a extending in the axial direction of the spool 102, a radial passage 151b open at a bottom surface of the outside first annular groove 143, the radial passage 151b extending in the radial direction of the spool 102, and a first restrictor 151c placed in the radial passage 151b. That is, the first restrictor 151c configured to apply resistance to the passing working oil is provided in the first communication passage 151.

The second communication passage 152 has an axial passage 152a open at an end surface of the projecting end portion 136B, the axial passage 152a extending in the axial direction of the spool 102, a radial passage 152b open at a bottom surface of the outside second annular groove 144, the radial passage 152b extending in the radial direction of the spool 102, and a second restrictor 152c placed in the radial passage 152b. That is, the second restrictor 152c configured to apply resistance to the passing working oil is provided in the second communication passage 152.

A third restrictor 113a configured to apply resistance to the passing working oil is provided in the drain passage 113.

The spool 102 is moved in the axial direction in response to the pressure inputted to the first pressure chamber 121 and the second pressure chamber 122. In a case where the pressure of the first pressure chamber 121 and the pressure of the second pressure chamber 122 are the same, the spool 102 is held at the neutral position (N0) by the first biasing spring 104A and the second biasing spring 104B serving as centering springs. At this time, the first spring receiving member 125A is abutted with the stepped portion 116A of the valve housing 101 and the second spring receiving member 125B is abutted with the stepped portion 116B of the valve housing 101. Thus, positioning precision of the neutral position (N0) of the spool 102 is improved.

When the spool 102 is placed at the neutral position (N0), and when the working oil from the main passage 17a is led to the first pressure chamber 121 via the first supply and discharge passage 111 and the first communication passage 151 and the pressure of the first pressure chamber 121 is increased and becomes higher than the pressure of the second pressure chamber 122, the spool 102 is moved rightward in the figure as shown in Fig. 3. At this time, the first spring receiving member 125A is abutted with the stepped portion 116A and movement of the first spring receiving member 125A is controlled. Thus, the first biasing spring 104A and the first spring receiving member 125A are separated from the stepped portion 137A of the spool 102. The second spring receiving member 125B is pressed by the stepped portion 137B of the spool 102 and moved rightward in the figure, and separated from the stepped portion 116B of the valve housing 101. Therefore, in accordance with movement of the second spring receiving member 125B, the second biasing spring 104B is contracted.

On the other hand, when the spool 102 is placed at the neutral position (N0), and when the working oil from the main passage 17b is led to the second pressure chamber 122 via the second supply and discharge passage 112 and the second communication passage 152 and the pressure of the second pressure chamber 122 is increased and becomes higher than the pressure of the first pressure chamber 121, the spool 102 is moved leftward in the figure. At this time, the second spring receiving member 125B is abutted with the stepped portion 116B and movement of the second spring receiving member 125B is controlled. Thus, the second biasing spring 104B and the second spring receiving member 125B are separated from the stepped portion 137B of the spool 102. The first spring receiving member 125A is pressed by the stepped portion 137A of the spool 102 and moved leftward in the figure, and separated from the stepped portion 116A of the valve housing 101. Therefore, in accordance with movement of the first spring receiving member 125A, the first biasing spring 104A is contracted.

As shown in Fig. 2, when the spool 102 is placed at the neutral position (N0), communication between the first supply and discharge passage 111 and the drain passage 113 is blocked by the inside first land portion 131. Communication between the second supply and discharge passage 112 and the drain passage 113 is blocked by the inside second land portion 132.

As shown in Fig. 3, when the spool 102 is moved to the axially other side (right side in the figure) from the neutral position (N0) by a predetermined stroke or more, the spool 102 is placed at the second blocking position (12). When the spool 102 is placed at the second blocking position (12), the communication between the first supply and discharge passage 111 and the drain passage 113 is blocked by the inside first land portion 131. The communication between the second supply and discharge passage 112 and the drain passage 113 is blocked by the central land portion 133.

When the spool 102 is moved to the axially one side (left side in the figure) from the neutral position (N0) shown in Fig. 2 by a predetermined stroke or more, the spool 102 is placed at the first blocking position (I1). When the spool 102 is placed at the first blocking position (I1), the communication between the second supply and discharge passage 112 and the drain passage 113 is blocked by the inside second land portion 132. The communication between the first supply and discharge passage 111 and the drain passage 113 is blocked by the central land portion 133.

As shown in Fig. 4, when the spool 102 is placed at the second communication position (C2), the second supply and discharge passage 112 communicates with the drain passage 113 through the inside second annular groove 142. The communication between the first supply and discharge passage 111 and the drain passage 113 is blocked by the inside first land portion 131.

When the spool 102 is placed at the first communication position (C1), the first supply and discharge passage 111 communicates with the drain passage 113 through the inside first annular groove 141. The communication between the second supply and discharge passage 112 and the drain passage 113 is blocked by the inside second land portion 132.

Next, actions of the anti-reverse valve 100 will be described with a case where a leftward turning action is stopped as an example.

When the operator operates the turning lever (not shown) to the left turning side, the direction control valve 13 is switched to the left turning position (B). Thereby, the working oil is supplied to the hydraulic motor 12 from the main passage 17b, and the working oil is discharged to the main passage 17a from the hydraulic motor 12, so that the hydraulic motor 12 performs the leftward turning action. At the time of this leftward turning action, the pressure of the main passage 17b is higher than that of the main passage 17a. Therefore, by leading the pressure of the main passage 17b to the second pressure chamber 122, the anti-reverse valve 100 is switched from the neutral position (N0) to the first blocking position (I1).

The first blocking position (I1) is a position at which the spool 102 is moved to the axially one side from the neutral position (N0) by a predetermined stroke or more, for example, moved at maximum. At the first blocking position (I1), the communication between the first supply and discharge passage 111 and the drain passage 113 is blocked and the communication between the second supply and discharge passage 112 and the drain passage 113 is blocked. Since the communication between the second supply and discharge passage 112 on the high pressure side and the drain passage 113 is blocked, drive pressure to the hydraulic motor 12 is prevented from releasing to the tank 19 through the drain passage 113 when the hydraulic motor 12 performs the leftward turning action. Therefore, at the time of accelerating the hydraulic motor 12, or at the time of rotating the hydraulic motor at fixed speed, it is possible to prevent the drive pressure to the hydraulic motor 12 from releasing through the anti-reverse valve 100, and it is possible to properly apply drive force to the hydraulic motor 12.

When the operator brings back the turning lever (not shown) to the neutral position during the leftward turning action, the direction control valve 13 is switched to the neutral position (N), supply of the working oil from the hydraulic pump 11 to the hydraulic motor 12 is cut, and the turning body 15 is rotated by inertia force.

By the pumping operation of the hydraulic motor 12, the brake pressure is generated in the main passage 17a and the turning body 15 is decelerated. At this time of braking, the pressure of the main passage 17a is higher than that of the main passage 17b. Therefore, by leading the pressure of the main passage 17a to the first pressure chamber 121, the anti-reverse valve 100 is switched from the first blocking position (I1) to the second blocking position (12).

The spool 102 passes through the first communication position (C1) at the time of moving from the first blocking position (I1) to the second blocking position (12). Therefore, while the spool 102 is moved from the first communication position (C1) to the neutral position (N0), the first supply and discharge passage 111 and the drain passage 113 communicate with each other. When the working oil of the first supply and discharge passage 111 is discharged straightaway to the drain passage 113, the brake pressure is temporarily radically decreased. Thus, there is a possibility that a braking action of the turning body 15 becomes unstable. However, in the present embodiment, the third restrictor 113a is provided in the drain passage 113. Thus, a radial decrease in the brake pressure through the drain passage 113 is prevented, and it is possible to smoothly decelerate the turning body 15.

As shown in Fig. 3, the second blocking position (12) is a position at which the spool 102 is moved to the axially other side from the neutral position (N0) by a predetermined stroke or more, for example, moved at maximum. At the second blocking position (12), the communication between the first supply and discharge passage 111 and the drain passage 113 is blocked and the communication between the second supply and discharge passage 112 and the drain passage 113 is blocked. Since the communication between the first supply and discharge passage 111 on the high pressure side and the drain passage 113 is blocked, the brake pressure to the hydraulic motor 12 is prevented from releasing to the tank 19 through the drain passage 113 at the time of stopping the hydraulic motor 12. At the time of decelerating the hydraulic motor 12, it is possible to prevent the brake pressure to the hydraulic motor 12 from releasing through the anti-reverse valve 100, and it is possible to properly apply the braking force to the hydraulic motor 12.

At the time of braking, the working oil is led to the second supply and discharge passage 112 on the low pressure side from the overload relief valve 18a. When the working oil of the second supply and discharge passage 112 on the low pressure side is led to the hydraulic motor 12 through the anti-reverse valve 100 and the discharge passage 23, internal pressure of the casing of the hydraulic motor 12 is increased, and there is a possibility that pressure which is use pressure or more acts on a sealing member provided in a rotation shaft of the hydraulic motor 12. Meanwhile, in the present embodiment, since the spool 102 is held at the second blocking position (12) at the time of braking, the communication between the second supply and discharge passage 112 on the low pressure side and the drain passage 113 is blocked. Therefore, the working oil of the second supply and discharge passage 112 on the low pressure side is prevented from being led to the hydraulic motor 12 through the anti-reverse valve 100 and the discharge passage 23. Thus, in the present embodiment, the pressure exceeding the use pressure is prevented from acting on the sealing member of the hydraulic motor 12, and it is possible to prevent damage to the sealing member of the hydraulic motor 12, that is, damage to a device on the discharge passage 23.

Although the hydraulic motor 12 is once stopped by the brake pressure, the main passage 17a where the brake pressure is generated is maintained in a high pressure state. Thus, the hydraulic motor 12 is rotated rightward, and the turning body 15 starts a rightward turning action. Since the turning body 15 performs the rightward turning action, the reverse pressure is generated in the main passage 17b by the pumping operation of the hydraulic motor 12. The reverse pressure is led to the second pressure chamber 122 of the anti-reverse valve 100. When the reverse pressure is led to the second pressure chamber 122, the anti-reverse valve 100 is switched from the second blocking position (12) to the second communication position (C2).

As shown in Fig. 4, at the second communication position (C2), the second supply and discharge passage 112 and the drain passage 113 communicate with each other through the inside second annular groove 142, and the working oil of the main passage 17b is discharged to the tank 19 through the second supply and discharge passage 112 and the drain passage 113. Since the reverse pressure generated in the main passage 17b is released through the anti-reverse valve 100, an increase in the reverse pressure is suppressed.

Since the first restrictor 151b is provided in the first communication passage 151, the working oil discharged from the first pressure chamber 121 to the main passage 17a is restricted. That is, movement of the spool 102 to the axially one side (left side in the figure) by the reverse pressure is restricted by holding pressure of the first pressure chamber 121. Thereby, the anti-reverse valve 100 is held at the second communication position (C2) for a predetermined time, and it is possible to effectively suppress the increase in the reverse pressure generated in the main passage 17b.

According to the embodiment described above, the following operations and effects are exerted.

(1) In the anti-reverse valve 100, the spool 102 is provided in the valve housing 101 to be movable to the first communication position (C1) at which the first supply and discharge passage 111 and the drain passage 113 communicate with each other, the second communication position (C2) at which the second supply and discharge passage 112 and the drain passage 113 communicate with each other, and the neutral position (N0) at which the communication between the first supply and discharge passage 111 and the drain passage 113 is blocked and the communication between the second supply and discharge passage 112 and the drain passage 113 is blocked.

In a case where the reverse pressure is generated in the main passage 17a and the first supply and discharge passage 111, by moving the spool 102 from the first blocking position (I1) to the first communication position (C1) by the reverse pressure led to the first pressure chamber 121, it is possible to release the reverse pressure to the drain passage 113 through the inside first annular groove 141. In a case where the reverse pressure is generated in the main passage 17b and the second supply and discharge passage 112, by moving the spool 102 from the second blocking position (12) to the second communication position (C2) by the reverse pressure led to the second pressure chamber 122, it is possible to release the reverse pressure to the drain passage 113 through the inside second annular groove 142. As a result, it is possible to prevent the reverse action of the hydraulic motor 12.

Unlike the conventional anti-reverse valve in which the pair of check valves is provided inside the spool, check valves are not required in the present embodiment. That is, with the anti-reverse valve 100 according to the present embodiment, the number of parts is small and the configuration is simple in comparison to the conventional example. Therefore, according to the present embodiment, it is possible to provide the anti-reverse valve 100 configured to prevent the reverse action of the hydraulic motor 12 at low cost. Since there is no need for providing check valves in the valve housing 101 in the anti-reverse valve 100 according to the present embodiment, there is no concern about action failure of check valves.

(2) In the present embodiment, the valve housing 101 and the spool 102 are formed so that when the spool 102 is moved in the axial direction from the neutral position (N0) by a predetermined stroke or more, for example, moved by the maximum stroke, the communication between the first supply and discharge passage 111 and the drain passage 113 is blocked and the communication between the second supply and discharge passage 112 and the drain passage 113 is blocked.

Therefore, it is possible to prevent that when the brake pressure is generated in one of the pair of main passages 17a, 17b, the working oil of the other main passage 17a or 17b is led to the hydraulic motor 12 connected to the discharge passage 23 through the anti-reverse valve 100. As a result, the pressure exceeding the use pressure is prevented from acting on the sealing member of the hydraulic motor 12 provided on the discharge passage 23 that connects the anti-reverse valve 100 and the tank 19, and it is possible to prevent damage to the sealing member of the hydraulic motor 12, that is, damage to a device on the discharge passage 23.

The following modified examples are within the range of the present invention, and the configurations shown in the modified examples can be combined with the configuration described in the above embodiment, or the configurations to be described in the following different modified examples can be combined with each other.

### <Modified Example 1>

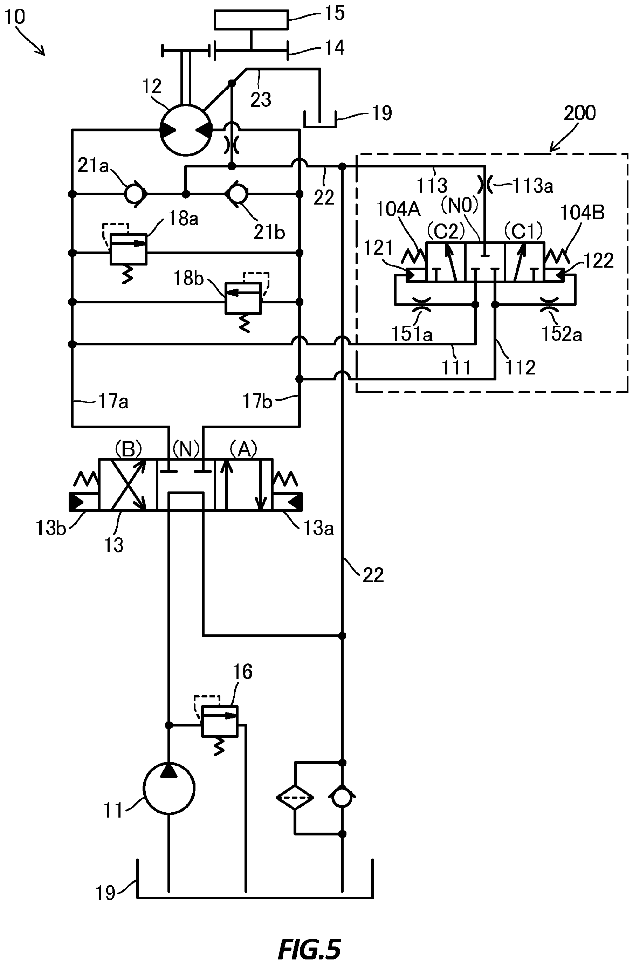

In the above embodiment, the example in which the valve housing 101 and the spool 102 are formed so that when the spool 102 is moved in the axial direction from the neutral position (N0) by a predetermined stroke or more, the communication between the first supply and discharge passage 111 and the drain passage 113 is blocked and the communication between the second supply and discharge passage 112 and the drain passage 113 is blocked is described. However, in an example not forming part of the invention, as shown in Fig. 5, the first blocking position (11) and the second blocking position (12) described in the above embodiment may not be provided.

In an anti-reverse valve 200 according to Modified Example 1, when the spool 102 is moved to the axially one side from the neutral position (N0) by a predetermined stroke or more, that is, when the spool 102 is placed at the first communication position (C1), the first supply and discharge passage 111 and the drain passage 113 communicate with each other. In the anti-reverse valve 200, when the spool 102 is moved to the axially other side from the neutral position (N0) by a predetermined stroke or more, that is, when the spool 102 is placed at the second communication position (C2), the second supply and discharge passage 112 and the drain passage 113 communicate with each other.

In the present modified example, the drain passage 113 is not connected to the discharge passage 23 but only connected the make-up passage 22. Thereby, it is possible to prevent that when the brake pressure is generated in one of the pair of main passages 17a, 17b, the working oil of the other main passage 17a or 17b is led to the hydraulic motor 12 connected to the discharge passage 23 through the anti-reverse valve 200. As a result, the pressure exceeding the use pressure is prevented from acting on the sealing member of the hydraulic motor 12, and it is possible to prevent damage to the sealing member of the hydraulic motor 12.

### <Modified Example 2>

In the above embodiment, the example in which the third restrictor 113a is provided in the valve housing 101 is described. However, the present invention is not limited to this. The third restrictor 113a may be provided in the drain passage 113 outside the valve housing 101.

### <Modified Example 3>

In the above embodiment, the example in which the first blocking position (I1) is a position at which the spool 102 is moved to the axially one side from the neutral position (N0) at maximum and the second blocking position (12) is a position at which the spool 102 is moved to the axially other side from the neutral position (N0) at maximum is described. However, the present invention is not limited to this. It is only required to form the valve housing 101 and the spool 102 so that when the spool 102 is moved in the axial direction from the neutral position (N0) by a predetermined stroke or more, the communication between the first supply and discharge passage 111 and the drain passage 113 is blocked and the communication between the second supply and discharge passage 112 and the drain passage 113 is blocked. The predetermined stroke is not limited to the maximum stroke. The predetermined stroke is only required to be a stroke that enables switching to the blocking position (12) (or the blocking position (I1)) when the pressure by a normal action at the time of acceleration of the hydraulic motor 12, fixed rotation, braking, etc. is led to the first pressure chamber 121 (or the second pressure chamber 122). The predetermined stroke may be a stroke shorter than the maximum stroke.

### <Modified Example 4>

In the above embodiment, the case where the actuator serving as an object whose reverse action is prevented is the hydraulic motor 12 is described. However, the present invention is not limited to this. For example, the actuator may be a hydraulic cylinder that swings the turning body 15 leftward and rightward.

### <Modified Example 5>

In the above embodiment, the example in which the working oil is used as the working fluid of the actuator is described. However, other fluids such as working water may be used as the working fluid.

The configurations, operations, and effects of the present invention formed as above will be described collectively.

The anti-reverse valve 100, 200 is the anti-reverse valve configured to prevent the reverse action of the actuator (hydraulic motor 12) immediately after stoppage, including the valve housing 101 having the first supply and discharge passage 111 connected to one of the pair of main passages 17a, 17b through which the working fluid (working oil) is supplied to and discharged from the actuator (hydraulic motor 12), the second supply and discharge passage 112 connected to the other main passage 17a or 17b, and the drain passage 113 connected to the tank 19, the spool 102 slidably accommodated in the valve housing 101, the spool being movable to the first communication position (C1) at which the first supply and discharge passage 111 and the drain passage 113 communicate with each other, the second communication position (C2) at which the second supply and discharge passage 112 and the drain passage 113 communicate with each other, and the neutral position (N0) at which the communication between the first supply and discharge passage 111 and the drain passage 113 is blocked and the communication between the second supply and discharge passage 112 and the drain passage 113 is blocked, the first pressure chamber 121 to which the working fluid (working oil) that biases the spool 102 toward the second communication position (C2) is led, the second pressure chamber 122 to which the working fluid (working oil) that biases the spool 102 toward the first communication position (C1) is led, and the biasing member (first biasing spring 104A, second biasing spring 104B) configured to hold the spool 102 at the neutral position (N0), wherein the first communication passage 151 that allows the first supply and discharge passage 111 to communicate with the first pressure chamber 121 irrespective of the position of the spool 102, and the second communication passage 152 that allows the second supply and discharge passage 112 to communicate with the second pressure chamber 122 irrespective of the position of the spool 102 are provided inside the spool 102, the first restrictor 151c configured to apply resistance to the passing working fluid (working oil) is provided in the first communication passage 151, the second restrictor 152c configured to apply resistance to the passing working fluid (working oil) is provided in the second communication passage 152, and the first annular groove (inside first annular groove 141) that allows the first supply and discharge passage 111 to communicate with the drain passage 113 when the spool 102 is placed at the first communication position (C1), and the second annular groove (inside second annular groove 142) that allows the second supply and discharge passage 112 to communicate with the drain passage 113 when the spool 102 is placed at the second communication position (C2) are provided in the outer periphery of the spool 102.

With this configuration, in a case where the reverse pressure is generated in the first supply and discharge passage 111, it is possible to release the reverse pressure to the drain passage 113 through the first annular groove (inside first annular groove 141). In a case where the reverse pressure is generated in the second supply and discharge passage 112, it is possible to release the reverse pressure to the drain passage 113 through the second annular groove 142 (inside second annular groove 142). Since it is possible to release the reverse pressure by the movement of the spool 102, it is possible to provide the anti-reverse valve 100, 200 configured to prevent the reverse action of the actuator (hydraulic motor 12) at low cost.

In the anti-reverse valve 100, the valve housing 101 and the spool 102 are formed so that when the spool 102 is moved in the axial direction by a predetermined stroke or more, the communication between the first supply and discharge passage 111 and the drain passage 113 is blocked and the communication between the second supply and discharge passage 112 and the drain passage 113 is blocked.

With this configuration, at the time of braking of the actuator (hydraulic motor 12), it is possible to prevent damage to a device provided on the discharge passage 23 that connects the anti-reverse valve 100 and the tank 19.

In the anti-reverse valve 100, 200, the biasing member has the first biasing spring 104A arranged in the first pressure chamber 121, the first biasing spring being configured to extend and contract in accordance with the axial movement of the spool 102 and increase and decrease the biasing force to the spool 102, and the second biasing spring 104B arranged in the second pressure chamber 122, the second biasing spring being configured to extend and contract in accordance with the axial movement of the spool 102 and increase and decrease the biasing force to the spool 102, the anti-reverse valve further includes the first spring receiving member 125A provided between the one end side of the spool 102 and the first biasing spring 104A, and the second spring receiving member 125B provided between the other end side of the spool 102 and the second biasing spring 104B, the valve housing 101 has the first abutment portion (stepped portion 116A) with which the first spring receiving member 125A is abutted, and the second abutment portion (stepped portion 116B) with which the second spring receiving member 125B is abutted, by abutting the first spring receiving member 125A with the first abutment portion (stepped portion 116A) when the working fluid (working oil) is led to the first pressure chamber 121, the first spring receiving member 125A is separated from the spool 102 and the second spring receiving member 125B is separated from the second abutment portion (stepped portion 116B), and by abutting the second spring receiving member 125B with the second abutment portion (stepped portion 116B) when the working fluid (working oil) is led to the second pressure chamber 122, the second spring receiving member 125B is separated from the spool 102 and the first spring receiving member 125A is separated from the first abutment portion (stepped portion 116A).

With this configuration, by abutting the spring receiving members 125A, 125B with the abutment portions (stepped portions 116A, 116B) of the valve housing 101, the positioning precision of the neutral position (N0) of the spool 102 is improved.

Embodiments of the present invention were described above, but the above embodiments are merely examples of applications of the present invention, and the technical scope of the present invention is not limited to the specific constitutions of the above embodiments but by the scope of the appended claims.

## Claims

1. An anti-reverse valve (100) configured to prevent a reverse action of an actuator (12) immediately after a pair of main passages (17a, 17b) through which a working fluid is supplied to and discharged from the actuator (12) are blocked, comprising:
a valve housing (101) having a first supply and discharge passage (111) connected to one of the pair of main passages (17a, 17b), a second supply and discharge passage (112) connected to the other main passage (17a or 17b), and a drain passage (113) connected to a tank (19);
a spool (102) slidably accommodated in the valve housing (101), the spool being movable to a first communication position (C1) at which the first supply and discharge passage (111) and the drain passage (113) communicate with each other, a second communication position (C2) at which the second supply and discharge passage (112) and the drain passage (113) communicate with each other, and a neutral position (N0) at which communication between the first supply and discharge passage (111) and the drain passage (113) is blocked and communication between the second supply and discharge passage (112) and the drain passage (113) is blocked;
a first pressure chamber (121) to which the working fluid that biases the spool (102) toward the second communication position (C2) is led;
a second pressure chamber (122) to which the working fluid that biases the spool (102) toward the first communication position (C1) is led; and
a biasing member (104A, 104B) configured to hold the spool (102) at the neutral position (N0),
**characterized by**
a first communication passage (151) that allows the first supply and discharge passage (111) to communicate with the first pressure chamber (121) irrespective of the position of the spool (102), and a second communication passage (152) that allows the second supply and discharge passage (112) to communicate with the second pressure chamber (122) irrespective of the position of the spool (102) are provided inside the spool (102), a first restrictor (151c) configured to apply resistance to the passing working fluid is provided in the first communication passage (151),
a second restrictor (152c) configured to apply resistance to the passing working fluid is provided in the second communication passage (152),
a first annular groove (141) that allows the first supply and discharge passage (111) to communicate with the drain passage (113) when the spool (102) is placed at the first communication position (C1), and a second annular groove (142) that allows the second supply and discharge passage (112) to communicate with the drain passage (113) when the spool (102) is placed at the second communication position (C2) are provided in an outer periphery of the spool (102),
the spool (102) being movable to a first blocking position (11) at which communication between the first supply and discharge passage (111) and the drain passage (113) is blocked and communication between the second supply and discharge passage (112) and the drain passage (113) is blocked when the spool (102) is moved to the axially one side from the neutral position (N0) by a predetermined stroke or more,
the spool (102) being movable to a second blocking position (12) at which communication between the first supply and discharge passage (111) and the drain passage (113) is blocked and communication between the second supply and discharge passage (112) and the drain passage (113) is blocked when the spool (102) is moved to the axially other side from the neutral position (N0) by a predetermined stroke or more,
the first communication position (C1) is positioned between the neutral position (N0) and the first blocking position (11), and
the second communication position (C2) is positioned between the neutral position (N0) and the second blocking position (12).

2. The anti-reverse valve (100) according to claim 1, wherein the biasing member (104A, 104B) has:
a first biasing spring (104A) arranged in the first pressure chamber (121), the first biasing spring (104A) being configured to extend and contract in accordance with axial movement of the spool (102) and increase and decrease biasing force to the spool (102); and
a second biasing spring (104B) arranged in the second pressure chamber (122), the second biasing spring (104B) being configured to extend and contract in accordance with the axial movement of the spool (102) and increase and decrease the biasing force to the spool (102),
the anti-reverse valve (100) further comprises:
a first spring receiving member (125A) provided between the one end side of the spool (102) and the first biasing spring (104A); and
a second spring receiving member (125B) provided between the other end side of the spool (102) and the second biasing spring (104B),
the valve housing (101) has:
a first abutment portion (116A) with which the first spring receiving member (125A) is abutted; and
a second abutment portion (116B) with which the second spring receiving member (125B) is abutted,
by abutting the first spring receiving member (125A) with the first abutment portion (116A) when the working fluid is led to the first pressure chamber (121), the first spring receiving member (125A) is separated from the spool (102) and the second spring receiving member (125B) is separated from the second abutment portion (116B), and
by abutting the second spring receiving member (125B) with the second abutment portion (116B) when the working fluid is led to the second pressure chamber (122), the second spring receiving member (125B) is separated from the spool (102) and the first spring receiving member (125A) is separated from the first abutment portion (116A).

## Patentansprüche

1. Rückwärtsbewegungs-Verhinderungsventil (100), das so ausgeführt ist, dass es eine Rückwärtsbewegung eines Antriebselementes (12) unmittelbar nach Blockieren paariger Hauptkanäle (17a, 17b) verhindert, über die dem Antriebselement (12) ein Arbeitsfluid zugeführt und aus diesem abgeleitet wird, wobei es umfasst:
ein Ventilgehäuse (101), das einen ersten Zuleit-und-Ableit-Kanal (111), der mit einem der paarigen Hauptkanäle (17a, 17b) verbunden ist, einen zweiten Zuleit-und-Ableit-Kanal (112), der mit dem anderen Hauptkanal (17a oder 17b) verbunden ist, sowie einen Ablasskanal (113) aufweist, der mit einem Tank (19) verbunden ist;
einen Schieber (102), der gleitend in dem Ventilgehäuse (101) aufgenommen ist, wobei der Schieber an eine erste Verbindungsposition (C1), in der der erste Zuleit-und-Ableit-Kanal (111) und der Ablasskanal (113) miteinander in Verbindung stehen, an eine zweite Verbindungsposition (C2), in der der zweite Zuleit-und-Ableit-Kanal (112) und der Ablasskanal (113) miteinander in Verbindung stehen, sowie an eine neutrale Position (NO) bewegt werden kann, in der Verbindung zwischen dem ersten Zuleit-und-Ableit-Kanal (111) und dem Ablasskanal (113) gesperrt ist und Verbindung zwischen dem zweiten Zuleit-und-Ableit-Kanal (112) und dem Ablasskanal (113) gesperrt ist;
eine erste Druckkammer (121), in die das Arbeitsfluid geleitet wird, das den Schieber (102) in Richtung der zweiten Verbindungsposition (C2) vorspannt;
eine zweite Druckkammer (122), in die das Arbeitsfluid geleitet wird, das den Schieber (102) in Richtung der ersten Verbindungsposition (C1) vorspannt; sowie
ein Vorspannelement (104A, 104B), das so ausgeführt ist, dass es den Schieber (102) in der neutralen Position (NO) hält,
**dadurch gekennzeichnet, dass**
ein erster Verbindungskanal (151), der zulässt, dass der erste Zuleit-und-Ableit-Kanal (111),
unabhängig von der Position des Schiebers (102) mit der ersten Druckkammer (121) in Verbindung steht, sowie ein zweiter Verbindungskanal (152), der zulässt, dass der zweite Zuleit-und-Ableit-Kanal (112), unabhängig von der Position des Schiebers (102), mit der zweiten Drucckammer (122) in Verbindung steht, im Inneren des Schiebers (102) vorhanden sind,
eine erste Drossel (151c), die so ausgeführt ist, dass sie dem durchströmenden Arbeitsfluid Widerstand entgegensetzt, in dem ersten Verbindungskanal (151) vorhanden ist,
eine zweite Drossel (152c), die so ausgeführt ist, dass sie dem durchströmenden Arbeitsfluid Widerstand entgegensetzt, in dem zweiten Verbindungskanal (152) vorhanden ist,
eine erste Ringnut (141), die zulässt, dass der erste Zuleit-und-Ableit-Kanal (111) mit dem Ablasskanal (113) in Verbindung steht, wenn der Schieber (102) an die erste Verbindungsposition (C1) versetzt ist, sowie eine zweite Ringnut (142), die zulässt, dass der zweite Zuleit-und-Ableit-Kanal (112) mit dem Ablasskanal (113) in Verbindung steht, wenn der Schieber (102) an die zweite Verbindungsposition (C2) versetzt ist, in einem Außenumfang des Schiebers (102) vorhanden sind,
der Schieber (102) in eine erste Blockierposition (I1) bewegt werden kann, in der Verbindung zwischen dem ersten Zuleit-und-Ableit-Kanal (111) und dem Ablasskanal (113) blockiert ist und Verbindung zwischen dem zweiten Zuleit-und-Ableit-Kanal (112) und dem Ablasskanal (113) blockiert ist, wenn der Schieber (102) aus der neutralen Position (NO) um einen vorgegebenen Hub oder mehr an die eine axiale Seite bewegt wird,
der Schieber (102) in eine zweite Blockierposition (I2) bewegt werden kann, in der Verbindung zwischen dem ersten Zuleit-und-Ableit-Kanal (111) und dem Ablasskanal (113) blockiert ist und Verbindung zwischen dem zweiten Zuleit-und-Ableit-Kanal (112) und dem Ablasskanal (113) blockiert ist, wenn der Schieber (102) aus der neutralen Position (NO) um einen vorgegebenen Hub oder mehr an die andere axiale Seite bewegt wird,
die erste Verbindungsposition (C1) zwischen der neutralen Position (NO) und der ersten Blockierposition (I1) liegt, und
die zweite Verbindungsposition (C2) zwischen der neutralen Position (NO) und der zweiten Blockierposition (I2) liegt.

2. Rückwärtsbewegungs-Verhinderungsventil (100) nach Anspruch 1, wobei das Vorspannelement (104A, 104B) aufweist:
eine erste Vorspannfeder (104A), die in der ersten Druckkammer (121) angeordnet ist, wobei die erste Vorspannfeder (104A) so ausgeführt ist, dass sie sich entsprechend axialer Bewegung des Schiebers (102) ausdehnt und zusammenzieht und Vorspannkraft auf den Schieber (102) verstärkt und abschwächt; sowie
eine zweite Vorspannfeder (104B), die in der zweiten Druckkammer (122) angeordnet ist, wobei die zweite Vorspannfeder (104B) so ausgeführt ist, dass sie sich entsprechend der axialen Bewegung des Schiebers (102) ausdehnt und zusammenzieht und die Vorspannkraft auf den Schieber (102) verstärkt und abschwächt,
und wobei das Rückwärtsbewegungs-Verhinderungsventil (100) des Weiteren umfasst:
ein erstes Feder-Aufnahmeelement (125A), das zwischen der einen Endseite des Schiebers (102) und der ersten Vorspannfeder (104A) vorhanden ist; sowie
ein zweites Feder-Aufnahmeelement (125B), das zwischen der anderen Endseite des Schiebers (102) und der zweiten Vorspannfeder (104B) vorhanden ist,
wobei das Ventilgehäuse (101) aufweist:
einen ersten Anschlagabschnitt (116A), an dem das erste Feder-Aufnahmeelement (125A) anschlägt; und
einen zweiten Anschlagabschnitt (116B), an dem das zweite Feder-Aufnahmeelement (125B) anschlägt,
wobei durch Anschlagen des ersten Feder-Aufnahmeelementes (125A) an dem ersten Anschlagabschnitt (116A), wenn das Arbeitsfluid zu der ersten Druckkammer (121) geleitet wird,
das erste Feder-Aufnahmeelement (125A) von dem Schieber (102) getrennt wird und das zweite Feder-Aufnahmeelement (125B) von dem zweiten Anschlagabschnitt (116B) getrennt wird, und
durch Anschlagen des zweiten Feder-Aufnahmeelementes (125B) an dem zweiten Anschlagabschnitt (116B), wenn das Arbeitsfluid zu der zweiten Druckkammer (122) geleitet wird, das zweite Feder-Aufnahmeelement (125B) von dem Schieber (102) getrennt wird und das erste Feder-Aufnahmeelement (125A) von dem ersten Anschlagabschnitt (116A) getrennt wird.

## Revendications

1. Vanne anti-inversion (100) configurée pour éviter un actionnement inverse d'un actionneur (12) immédiatement après le blocage d'une paire de passages principaux (17a, 17b) à travers lesquels un fluide de travail est alimenté et refoulé dans l'actionneur (12), comprenant :
un boîtier de vanne (101) comportant un premier passage d'alimentation et de refoulement (111) connecté à un passage de la paire de passages principaux (17a, 17b), un deuxième passage d'alimentation et de refoulement (112) connecté à l'autre passage principal (17a ou 17b), et un passage de drainage (113) connecté à un réservoir (19) ;
une bobine (102) logée de manière coulissante dans le boîtier de vanne (101), la bobine étant déplaçable jusqu'à une première position de communication (C1) dans laquelle le premier passage d'alimentation et de refoulement (111) et le passage de drainage (113) communiquent entre eux, une deuxième position de communication (C2) dans laquelle le deuxième passage d'alimentation et de refoulement (112) et le passage de drainage (113) communiquent entre eux, et une position neutre (NO) dans laquelle la communication entre le premier passage d'alimentation et de refoulement (111) et le passage de drainage (113) est bloquée et la communication entre le deuxième passage d'alimentation et de refoulement (112) et le passage de drainage (113) est bloquée ;
une première chambre de pression (121) dans laquelle est envoyé le fluide de travail qui contraint la bobine (102) vers la deuxième position de communication (C2) ;
une deuxième chambre de pression (122) dans laquelle est envoyé le fluide de travail qui contraint la bobine (102) vers la première position de communication (C1) ; et
un élément de contrainte (104A, 104B) configuré pour maintenir la bobine (102) dans la position neutre (NO),
**caractérisée en ce que**
un premier passage de communication (151) qui permet au premier passage d'alimentation et de refoulement (111) de communiquer avec la première chambre de pression (121) indépendamment de la position de la bobine (102) et un deuxième passage de communication (152) qui permet au deuxième passage d'alimentation et de refoulement (112) de communiquer avec la deuxième chambre de pression (122) indépendamment de la position de la bobine (102) sont pourvus à l'intérieur de la bobine (102),
un premier limiteur (151c) configuré pour appliquer une résistance à l'écoulement du fluide de travail est pourvu dans le premier passage de communication (151),
un deuxième limiteur (152c) configuré pour appliquer une résistance à l'écoulement du fluide de travail est pourvu dans le deuxième passage de communication (152),
une première gorge annulaire (141) qui permet au premier passage d'alimentation et de refoulement (111) de communiquer avec le passage de drainage (113) quand la bobine (102) est placée dans la première position de communication (C1) et une deuxième gorge annulaire (142) qui permet au deuxième passage d'alimentation et de refoulement (112) de communiquer avec le passage de drainage (113) quand la bobine (102) est placée dans la deuxième position de communication (C2) sont pourvues sur la périphérie externe de la bobine (102),
la bobine (102) étant déplaçable jusqu'à une première position de blocage (I1) où la communication entre le premier passage d'alimentation et de refoulement (111) et le passage de drainage (113) est bloquée et la communication entre le deuxième passage d'alimentation et de refoulement (112) et le passage de drainage (113) est bloquée quand la bobine (102) est déplacée axialement d'un côté de la position neutre (NO) sur une distance supérieure ou égale à une course prédéterminée,
la bobine (102) étant déplaçable jusqu'à une deuxième position de blocage (12) où la communication entre le premier passage d'alimentation et de refoulement (111) et le passage de drainage (113) est bloquée et la communication entre le deuxième passage d'alimentation et de refoulement (112) et le passage de drainage (113) est bloquée quand la bobine (102) est déplacée axialement de l'autre côté de la position neutre (NO) sur une distance supérieure ou égale à une course prédéterminée,
la première position de communication (C1) est située entre la position neutre (NO) et la première position de blocage (I1), et
la deuxième position de communication (C2) est située entre la position neutre (NO) et la deuxième position de blocage (12).

2. Vanne anti-inversion (100) selon la revendication 1, dans laquelle
l'élément de contrainte (104A, 104B) comporte :
un premier ressort de contrainte (104A) agencé dans la première chambre de pression (121), le premier ressort de contrainte (104A) étant configuré pour s'étendre et se contracter conformément au déplacement axial de la bobine (102) et pour augmenter ou diminuer la force de contrainte sur la bobine (102) ; et
un deuxième ressort de contrainte (104B) agencé dans la deuxième chambre de pression (122), le deuxième ressort de contrainte (104B) étant configuré pour s'étendre et se contracter conformément au déplacement axial de la bobine (102) et pour augmenter et diminuer la force de contrainte sur la bobine (102),
la vanne anti-inversion (100) comprend en outre :
un premier élément de réception de ressort (125A) pourvu entre un côté d'extrémité de la bobine (102) et le premier ressort de contrainte (104A) ; et
un deuxième élément de réception de ressort (125B) pourvu entre l'autre côté d'extrémité de la bobine (102) et le deuxième ressort de contrainte (104B),
le boîtier de vanne (101) comporte :
une première portion de butée (116A) contre laquelle vient à butée le premier élément de réception de ressort (125A) ; et
une deuxième portion de butée (116B) contre laquelle vient à butée le deuxième élément de réception de ressort (125B),
en mettant à butée le premier élément de réception de ressort (125A) contre la première portion de butée (116A) quand le fluide de travail est envoyé dans la première chambre de pression (121), le premier élément de réception de ressort (125A) est séparé de la bobine (102) et le deuxième élément de réception de ressort (125B) est séparé de la deuxième portion de butée (116B), et
en mettant à butée le deuxième élément de réception de ressort (125B) contre la deuxième portion de butée (116B) quand le fluide de travail est envoyé dans la deuxième chambre de pression (122), le deuxième élément de réception de ressort (125B) est séparé de la bobine (102) et le premier élément de réception de ressort (125A) est séparé de la première portion de butée (116A).
